Europäisches Patentamt

**European Patent Office**

**Office européen des brevets**

(19)

(11) Numéro de publication: **0 074 907**
**A1**

(12)

# DEMANDE DE BREVET EUROPEEN

(21) Numéro de dépôt: **82401663.8**

(22) Date de dépôt: **13.09.82**

(51) Int. Cl.³: **B 29 D 27/00**
**C 08 J 9/08**

(30) Priorité: **14.09.81 FR 8117344**

(43) Date de publication de la demande:
**23.03.83 Bulletin 83/12**

(84) Etats contractants désignés:
**DE GB IT**

(71) Demandeur: **COMPAGNIE FRANCAISE DE RAFFINAGE**
**Société anonyme dite:**
**5, rue Michel-Ange**
**F-75781 Paris Cedex 16(FR)**

(72) Inventeur: **Lemoine, Guy**
**81, rue Louis Delamare**
**F-76600 Le Havre(FR)**

(72) Inventeur: **Lucas, Robert**
**34, rue Démidoff**
**F-76600 Le Havre(FR)**

(72) Inventeur: **Vernon, Michel**
**34, Chemin de Saint Jean**
**F-77470 Trilport(FR)**

(74) Mandataire: **Jolly, Jean-Pierre et al,**
**Cabinet BROT et JOLLY 83, rue d'Amsterdam**
**F-75008 Paris(FR)**

(54) **Procédé de fabrication d'objets composés d'un matériau rigide expansé à base de polychlorure de vinyle, objets obtenus par ce procédé et leurs applications.**

(57) L'invention concerne un procédé de fabrication d'objets composés d'un matériau rigide expansé à base de polychlorure de vinyle.

Ce procédé comprend les phases successives suivantes :

a) l'extrusion d'une préforme à partir d'un mélange initial comprenant :
- du polychlorure de vinyle,
- au moins un agent gonflant,
- au moins un anhydride organique,

b) le découpage éventuel de la préforme de façon à obtenir des ébauches de l'objet que l'on désire fabriquer,

c) l'expansion desdites ébauches dans de l'eau portée à une température supérieure à 70°C.

Les objets ainsi préparés présentent des propriétés d'isolation thermique et acoustique.

EP 0 074 907 A1

Procédé de fabrication d'objets composés d'un matériau rigide expansé à base de polychlorure de vinyle, objets obtenus par ce procédé et leurs applications.

La présente invention concerne un procédé de fabrication d'objets composés d'un matériau rigide expansé à base de polychlorure de vinyle. Elle concerne également les objets obtenus par ce procédé et diverses applications de ces objets.

La préparation du polychlorure de vinyle rigide expansé est une opération bien connue, qui a été de nombreuses fois décrite dans la littérature et a fait l'objet de nombreux brevets. On peut citer, par exemple, le brevet français n° 2 408 451.

Industriellement, elle se fait de façon discontinue par un procédé en trois étapes :

1) une première étape du procédé consiste à réaliser un mélange d'au moins trois constituants :

- un premier constituant qui est le constituant principal en pourcentage en poids, et qui est le polychlorure de vinyle lui-même ;

- au moins un deuxième constituant, susceptible de donner naissance à un gaz et qui peut être notamment l'azobisisobutyronitrile et/ou l'azodicarbonamide, le gaz engendré étant, dans ce cas, l'azote ;

- au moins un troisième constituant, susceptible d'engendrer un gaz, qui peut être, par exemple, un isocyanate ou un polyisocyanate, le gaz résultant étant, dans ce cas, l'anhydride carbonique.

En général, un quatrième constituant, un anhydride organique, tel que l'anhydride phtalique, est introduit dans le mélange.

D'autres ingrédients, notamment des stabilisants, peuvent être incorporés dans le mélange au cours de cette première étape.

Il y a lieu de noter que la présence dans le mélange d'au moins un composé liquide est souhaitée, afin d'obtenir un mélange homogène. Ce composé liquide est, par exemple, l'isocyanate et/ou le polyisocyanate.

2) Une deuxième étape du procédé consiste en un moulage du plastisol à une température qui peut être comprise, par exemple, entre 150 et 200°C, de préférence entre 160 et 180°C, et à une pression qui peut être comprise entre 5 et 500 bars, et de préférence, entre 100 et 300 bars.

Cette deuxième étape conduit à l'obtention d'un produit souple thermoplastique, contenant de très petites cellules, qui proviennent probablement de la décomposition thermique d'un ou de plusieurs constituants du plastisol.

Le produit ainsi obtenu à l'issue de cette deuxième étape est communément appelé "embryon".

3) Dans une troisième étape, on procède à l'expansion de l'embryon, par mise en contact de celui-ci avec de l'eau, en phase liquide ou en phase vapeur, à une pression qui est de préférence voisine de la pression atmosphérique et à une température de préférence comprise entre 70 et 100°C environ.

La température à laquelle est effectuée l'expansion peut être d'ailleurs plus élevée, si on ajoute à l'eau un constituant approprié, comme le glycol par exemple.

Cette troisième étape d'expansion peut être réalisée soit dans un cadre d'expansion dont les dimensions sont choisies en fonction de la taille désirée pour le produit final, soit en laissant l'embryon s'expanser librement.

Les réactions qui interviennent dans cette troisième étape ne sont pas exactement définies. On considère généralement que le troisième constituant, l'isocyanate ou le polyisocyanate, réagit avec l'eau et/ou le quatrième constituant, quand celui-ci existe.

On obtient ainsi une structure rigide expansée, grâce aux gaz provenant des différentes réactions.

Comme le montre cette description, la mise en oeuvre de ce procédé en discontinu est industriellement relativement compliquée. Il convient néanmoins parfaitement bien à la fabrication de plaques de polychlorure de vinyle expansé.

On a toutefois cherché à mettre au point un procédé en continu pour la préparation d'objets composés d'un matériau rigide expansé à base de polychlorure de vinyle.

C'est ainsi que le brevet français 1 313 237 concerne un procédé de fabrication en continu de produits cellulaires à base de polychlorure de vinyle et de polyisocyanates caractérisé par le fait qu'au cours d'une première étape, on extrude d'une manière continue un produit ayant la forme embryonnaire du produit final, dans un état compact et exempt de cellules. La création des cellules s'effectue au cours d'une deuxième étape, par réaction d'eau ou de vapeur d'eau, sur le polyisocyanate contenu dans le mélange. Selon ce brevet, pour obtenir une formation homogène des cellules, on incorpore, au mélange à extruder, un corps inerte, finement divisé, en remplacement de l'azobisisobutyronitrile. Ces particules inertes favoriseraient la formation homogène des cellules au moment du contact du produit extrudé avec l'eau. Ce procédé n'a toutefois pas permis d'obtenir des plaques de polychlorure de vinyle expansé dont les cellules étaient régulières.

La Demanderesse a établi qu'il n'était nullement nécessaire d'utiliser de telles particules inertes dans un procédé en continu par extrusion pour obtenir des produits ayant des cellules.

Le but de la présente invention est donc la mise au point d'un procédé de fabrication en continu d'objets composés d'un matériau rigide expansé à base de polychlorure de vinyle.

A cet effet, l'invention a pour objet un procédé de fabrication d'objets composés d'un matériau rigide expansé à base de polychlorure de vinyle, caractérisé en ce qu'il comprend les phases successives suivantes :

a) l'extrusion d'une préforme à partir d'un mélange comprenant, à l'exclusion de toutes particules inertes divisées :

- du polychlorure de vinyle ;

- au moins un premier agent gonflant susceptible d'engendrer un gaz, choisi dans le groupe constitué par les isocyanates et les polyisocyanates ;

- au moins un anhydride organique ;

b) le découpage éventuel de la préforme de façon à obtenir des ébauches de l'objet que l'on désire fabriquer ;

c) l'expansion desdites ébauches dans de l'eau portée à une température supérieure à 70°C.

Selon l'invention, le mélange initial extrudé peut contenir en outre au moins un deuxième agent gonflant choisi dans le groupe constitué par l'azobisisobutyronitrile et l'azodicarbonamide.

Cet agent (ou ces agents) est de préférence ajouté au mélange initial en quantité telle qu'il représente au plus, de préférence, 1 % en poids dudit mélange.

En effet, au-dessus de ce pourcentage, l'expansion ultérieure de la préforme ou des ébauches obtenues à partir de la préforme conduit à des objets imparfaitement expansés.

Le polychlorure de vinyle qui peut être utilisé dans le procédé selon l'invention peut être notamment un polychlorure de vinyle ayant un indice de viscosité, mesuré selon la norme NFT 51-013, qui peut être notamment compris entre 80 et 180.

Ce mélange initial peut contenir notamment de 20 à 60 % en poids de polychlorure de vinyle, de préférence à structure poreuse, obtenu par un procédé de polymérisation en masse.

Le premier agent gonflant, susceptible de produire un gaz, peut être notamment le toluène -2,4- diisocyanate (pouvant contenir du toluène -2,6- diisocyanate) ou le diphénylméthane -4,4'- diisocyanate, éventuellement en mélange. Le mélange initial peut contenir, notamment, de 20 à 40 % en poids de cet agent gonflant.

Le mélange initial contient également un anhydride organique comme l'anhydride phtalique, l'anhydride maléique ou l'anhydride succinique. Il peut contenir notamment de 0 à 30 % en poids d'un tel anhydride.

Il peut également contenir des additifs, par exemple des stabilisants, comme des sels de plomb, tels que le phosphite dibasique et le stéarate de plomb, des pigments et des colorants.

Dans le procédé selon l'invention, la préforme peut être extrudée sous une forme quelconque, par exemple un jonc, une bande, un tube, etc.

En général, cette préforme est découpée après un refroidissement éventuel. Ce refroidissement peut être effectué, par exemple, en faisant défiler la préforme dans de l'eau froide pendant un temps très court, de manière à ne pas provoquer l'expansion de la préforme.

L'expansion de la préforme ou des ébauches obtenues à partir de celle-ci est effectuée par leur mise en contact avec de l'eau, en phase liquide ou en phase vapeur, à une pression qui est de préférence voisine de la pression atmosphérique et à une température de préférence comprise entre 70 et 100°C environ.

La température à laquelle est effectuée l'expansion peut être d'ailleurs plus élevée, si on ajoute à l'eau un constituant approprié, comme le glycol, par exemple.

Selon la configuration de la préforme, la découpe se prête à la réalisation d'ébauches qui, après expansion, permettent d'obtenir des objets de formes très différentes.

Dans le cas d'une préforme ayant la configuration d'un jonc, on peut ainsi obtenir des granulés de polychlorure de vinyle expansé ayant sensiblement la forme de billes.

Ces objets, par exemple les billes, peuvent être réagglomérés pour leur utilisation ultérieure, par exemple en les mettant en contact avec un composé liquide, tel que la cyclohexanone ou le tétrahydrofuranne ou à l'aide de colles.

Ils peuvent également être réagglomérés lors de l'expansion des ébauches par mise en contact avec de l'eau, en les plaçant dans une cage de forme appropriée.

Les objets préparés par le procédé selon l'invention peuvent avoir des applications multiples.

Ils peuvent servir notamment pour l'isolation acoustique ou thermique dans le bâtiment, l'isolation thermique de cuves telles que les cuves de gaz liquéfiés.

Leur flottabilité permet également de les utiliser comme flotteurs, par exemple pour la pêche, ou comme barrages anti-pollution.

De plus, comme ce sont des produits légers, on peut les utiliser pour alléger des terreaux en agriculture, quand les objets sont de taille réduite.

Les exemples qui suivent, et qui n'ont aucun caractère limitatif, concernent la préparation de billes de de polychlorure de vinyle expansé par le procédé selon l'invention, et des essais de conductibilité thermique et de résistance à la compression effectués sur ces billes, en comparaison avec des produits utilisés couramment dans l'isolation thermique.

## EXEMPLE 1

Cet exemple concerne la fabrication de billes de polychlorure de vinyle expansé par le procédé selon l'invention.

On réalise tout d'abord dans un mélangeur chauffant à une température de 60°C le mélange MO dont la composition est donnée dans le Tableau I ci-après.

### TABLEAU I

| N° | CONSTITUANT | % EN POIDS |
|---|---|---|
| 1 | Polychlorure de vinyle (a) | 48 |
| 2 | Toluène diisocyanate (b) | 13,5 |
|   | Diphénylméthane -4,4'- diisocyanate | 10,5 |
| 3 | Anhydride phtalique | 26 |
| 4 | Stabilisant au baryum et au cadmium | 0,5 |
| 5 | Huile de soja époxydée | 1,5 |

(a) Polychlorure de vinyle en poudre

Indice de viscosité : 130 (selon norme AFNOR NFT 51-013).

Masse volumique apparente : 568 g/l.

(b) Mélange de 80 % de toluène -2,4- diisocyanate et de 20 % de toluène -2,6- diisocyanate.

On mélange d'abord les ingrédients solides (1,3 et 4) puis on verse lentement les ingrédients liquides (2 et 5).

On obtient ainsi le mélange MO.

A partir de ce mélange MO, on prépare différents mélanges MA et MB en ajoutant à MO respectivement différents pourcentages d'un deuxième agent gonflant, à savoir : l'azobisisobutyronitrile et l'azodicarbonamide.

La composition de ces mélanges est donnée dans le Tableau II ci-après, où l'on a indiqué les parties en poids d'agent gonflant ajoutées à 100 parties en poids de MO.

## TABLEAU II

| Mélange | Parties en poids d'agent gonflant pour 100 parties de MO | Agent gonflant |
|---------|---------------------------------------------------------|----------------|
| MA 1 | 0,05 | Azobisisobu-tyronitrile |
| MA 2 | 0,1 | – d° – |
| MA 3 | 0,2 | – d° – |
| MA 4 | 0,5 | – d° – |
| MA 5 | 1 | – d° – |
| MB 1 | 0,05 | Azodicarbonamide |
| MB 2 | 0,1 | – d° – |
| MB 3 | 0,2 | – d° – |
| MB 4 | 0,5 | – d° – |
| MB 5 | 1 | – d° – |

Les différents mélanges obtenus sont ensuite extrudés à 100°C, à travers une filière de section cylindrique, dont le diamètre est de 2 mm.

On refroidit les joncs obtenus dans de l'eau à 20°C quelques secondes, puis on les découpe dans un granulateur.

Les granulés obtenus sont expansés dans de l'eau portée à 97°C pendant 10 minutes.

On obtient ainsi des billes de polychlorure de vinyle expansé dont les masses volumiques apparentes sont données dans le Tableau III ci-après.

TABLEAU III

| MELANGE INITIAL | Masse volumique apparente en kg/m3 |
|---|---|
| MO | 48 |
| MA 1 | 40 |
| MA 2 | 37 |
| MA 3 | 50 |
| MA 4 | 100 |
| MA 5 | Pas d'expansion |
| MB 1 | 44 |
| MB 2 | 36 |
| MB 3 | 38 |
| MB 4 | 58 |
| MB 5 | Pas d'expansion |

On notera qu'il n'y a pas d'expansion pour les mélanges contenant 1 % en poids du deuxième agent gonflant.

### EXEMPLE 2

Cet exemple concerne des mesures de conductivité thermique et de résistance à la compression, effectuées sur les billes de polychlorure de vinyle rigide expansé préparées dans l'exemple 1, ainsi que sur des produits isolants connus.

Les mesures de conductibilité thermique ont été effectuées conformément à la norme AFNOR T 56 - 124.

Les mesures de résistance à la compression ont été effectuées conformément à la norme AFNOR T 56 - 101.

Les résultats sont donnés dans le Tableau IV ci-après.

### TABLEAU IV

| | Billes obtenues à partir de : | | | Per-lite | Vermi-culite H | Vermi-culite M |
|---|---|---|---|---|---|---|
| | MO | MA 2 | MB 2 | | | |
| Masse volumique apparente en kg/m³ | 48 | 37 | 36 | 80 | 100 | 107 |
| Coefficient de conductibilité thermique en Watt/m°K | 0,0237 | 0,0261 | 0,0257 | 0,0296 | 0,0431 | 0,0469 |
| Résistance à la compression (pression à exercer en kg/cm² pour obtenir 25 % de déformation) | 2,410 | non mesurée | non mesurée | 0,794 | 0,448 | 0,512 |

On constate que les billes obtenues par le procédé selon l'invention ont un faible coefficient de conductibilité thermique et sont donc de bons isolants et ont une bonne résistance à la compression.

0074907

R E V E N D I C A T I O N S

1.- Procédé de fabrication d'objets composés d'un matériau rigide expansé à base de polychlorure de vinyle, caractérisé en ce qu'il comprend les phases successives suivantes :

a) l'extrusion d'une préforme à partir d'un mélange initial comprenant, à l'exclusion de toutes particules inertes divisées :

- du polychlorure de vinyle ;

- au moins un premier agent gonflant susceptible d'engendrer un gaz choisi dans le groupe constitué par les isocyanates et les polyisocyanates ;

- au moins un anhydride organique ;

b) le découpage éventuel de la préforme de façon à obtenir des ébauches de l'objet que l'on désire fabriquer ;

c) l'expansion desdites ébauches dans de l'eau portée à une température supérieure à 70°C.

2.- Procédé selon la revendication 1, caractérisé en ce que la préforme est refroidie avant son découpage.

3.- Procédé selon l'une des revendications 1 et 2, caractérisé en ce que le polychlorure de vinyle est un polychlorure de vinyle à structure poreuse obtenu par un procédé de polymérisation en masse.

4.- Procédé selon l'une des revendications 1, 2 et 3, caractérisé en ce que le mélange initial contient moins de 1 % en poids d'un deuxième agent gonflant choisi dans le groupe constitué par l'azobisisobutyronitrile et l'azodicarbonamide.

5.- Les objets préparés selon l'une des revendications 1 à 4.

6.- Application des objets selon la revendication 5 à l'isolation thermique et/ou acoustique.

7.- Application des objets selon la revendication 5 à la réalisation de flotteurs.

8.- Application des objets selon la revendication 5 à la réalisation de barrages anti-pollution.

9.- Application des objets selon la revendication 5 à l'allègement des sols.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | B 29 D 27/00 |
| Y | US-A-3 256 217 (LANDLER) *En entier* | 1,4,5-9 | C 08 J 9/08 |
| | --- | | |
| Y | US-A-3 283 043 (LANDLER) *En entier* | 5-9 | |
| | --- | | |
| A | FR-A-1 310 473 (POLYPLASTIC) *En entier* | 1 | |
| | --- | | |
| A | DE-A-1 778 126 (CHEMISCHE WERKE HÜLS) *En entier* | 1 | |
| | --- | | |
| A | FR-A-1 266 487 (DUFOUR) *En entier* | 1 | **DOMAINES TECHNIQUES RECHERCHES (Int. Cl. ³)** |
| | --- | | |
| A | US-A-3 632 705 (MAKOWSKI) *En entier* | 1 | B 29 D 27/00 C 08 J 9/00 |
| | ----- | | |

Le présent rapport de recherche a été établi pour toutes les revendications

| Lieu de la recherche LA HAYE | Date d'achèvement de la recherche 20-12-1982 | Examinateur KUSARDY R. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82